# EUROPEAN PATENT SPECIFICATION

(11) **EP 4 510 345 B1**
(45) Date of publication and mention of the grant of the patent: **29.07.2026**
(21) Application number: 23860907.7
(22) Date of filing: 31.08.2023
(51) Int. Cl.: H01M 50/30, H01M 50/148, H01M 50/105, H01M 50/211, H01M 10/42, H01M 50/35, H01M 50/358, H01M 50/367

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 31.08.2022 KR 20220110389; 29.08.2023 KR 20230113516
(43) Date of publication of application: 19.02.2025
(73) Proprietor: LG Energy Solution, Ltd., Seoul 07335 (KR)
(72) Inventor: PARK, Jin Yong, Daejeon 34122 (KR); SHIN, Song Ju, Daejeon 34122 (KR); KIM, Seung Joon, Daejeon 34122 (KR); LEE, Myungwoo, Daejeon 34122 (KR); KWON, Wooyong, Daejeon 34122 (KR); KIM, Insoo, Daejeon 34122 (KR); MOON, Duck Hee, Daejeon 34122 (KR); JEONG, Jongha, Daejeon 34122 (KR); CHI, Ho June, Daejeon 34122 (KR); LEE, Taekyeong, Daejeon 34122 (KR); KIM, Kyungwoo, Daejeon 34122 (KR); HWANG, Ji Soo, Daejeon 34122 (KR); JUNG, Seyun, Daejeon 34122 (KR); KANG, Jongmo, Daejeon 34122 (KR)
(74) Representative: Plasseraud IP
(86) International application number: PCT/KR2023/012960
(87) International publication number: WO 2024/049231

(56) References cited:
- EP-A1- 4 345 994
- EP-A1- 4 404 361
- EP-A1- 4 432 450
- EP-A1- 4 465 431
- EP-A2- 1 039 565
- JP-A- 2005 322 434
- JP-A- 2010 108 788
- JP-A- 2022 094 722
- JP-B2- 4 821 196
- KR-A- 20210 077 278
- KR-A- 20210 139 167
- KR-A- 20220 075 712
- KR-A- 20220 098 588
- US-A1- 2022 173 476

## Description

### [Technical Field]

### CROSS-REFERENCE TO RELATED APPLICATION(S)

This application claims priority to and the benefit of Korean Patent Application No. 10-2022-0110389 filed in the Korean Intellectual Property Office on August 31, 2022, and Korean Patent Application No. 10-2023-0113516 filed in the Korean Intellectual Property Office on August 29, 2023.

The disclosure relates to a battery pack and a device including the same, and more particularly, to a battery pack capable of suppressing venting gas from moving toward the top of the battery pack when a thermal event occurs, and a device including the same.

### [Background Art]

Generally, secondary batteries refer to batteries that may be repeatedly charged and discharged, such as lithium ion batteries, lithium polymer batteries, nickel cadmium batteries, nickel hydrogen batteries, and nickel zinc batteries.

Recently, as secondary batteries have been applied to devices that require high power voltage and large charging capacity, such as electric vehicles or energy storage systems (ESSs), battery packs manufactured by connecting multiple battery cells in series or parallel to form a battery module and connecting multiple battery modules in series or parallel have been widely used.

In the case of electric vehicles, the number of lithium secondary batteries included in one battery module may increase or the number of battery modules included in one battery pack may increase depending on the power or capacity of the battery pack required for the electric vehicle.

Meanwhile, as an example, the battery modules of a battery pack for an electric vehicle may include battery cells, a busbar frame for electrically connecting the battery cells, and a module housing that may integrally accommodate the battery cells and the busbar frame, and are mounted in a pack case. Generally, pack cases include multiple beam frames to ensure durability against shock or vibrations. Here, the beam frame may extend from one wall surface of the pack case and may be coupled to the other wall surface to serve to suppress distortion or deformation of the pack case. The battery modules are disposed in an internal surface of the pack case partitioned by the beam frame and may be fixedly coupled to the pack case with bolts, etc.

However, in the case of a battery pack including battery modules as described above, when assembling the battery modules in a pack case, the battery modules cannot be arranged to be completely in close contact with each other due to the structure, so a spatial gap may exist between the battery modules, and in particular, there is a limit to increasing the energy capacity of the battery pack because a module housing of the battery modules acts as a factor that reduces the energy density per unit volume of the battery pack.

Accordingly, as portion of an increase in the energy capacity of battery packs, cell-to-pack (( CTP), which refers to a method of assembling battery cells directly inside a battery pack case, while omitting a battery module unit) type battery pack has been researched and developed.

However, in a battery pack for an electric vehicle, when a thermal event, such as internal ignition, occurs, the degree of risk to occupants may vary depending on directions in which the emission of flames or venting gas may be induced. For example, battery packs for electric vehicles are generally arranged below the front and rear seats of vehicles. However, if a thermal event occurs in the battery pack and venting gas is discharged vertically in an upward direction of the battery pack, the possibility that vehicle occupants inhale the venting gas is very high, which may be fatal to safety.

An example of a battery module in which a plurality of batteries are accommodated in a case can be found in JP 2005-322434 A. An example of a battery pack comprising battery cells and a cell cover with a plurality of holes can be found in EP 4404361 A1. Document US 2022/173476 A1 discloses a battery module according to the preamble of claim 1.

### [Disclosure]

### [Technical Problem]

The present invention attempts to provide a battery pack and a device including the same, capable of accommodating pouch-type battery cells in a pack case space-efficiently, reducing the overall weight and volume, while maintaining a high energy density compared to the related art battery pack, simplifying an assembly process, and suppressing movement of venting gas in an upward direction and inducing the venting gas in a certain direction, in a situation in which a thermal event occurs, while increasing the energy density, thereby promoting user safety.

However, the problems to be solved by the exemplary embodiments of the disclosure are not limited to the aforementioned problems, and other problems not described may be expanded to the extent that may be clearly understood by those skilled in the art from the description of the disclosure.

### [Technical Solution]

According to an embodiment, a battery pack is defined according to the appended independent claim 1.

The pack case may include an exhaust safety passage for exhausting gas to the outside, and the vertical movement passage may communicate with the exhaust safety passage.

The gas direction change portion may be one surface of the gas cutoff portion facing the inside of the cell cover.

The gas direction change portion may be an arc-shaped curved surface facing the inside of the cell cover.

The gas direction change portion may be an inclined surface connecting upper and side surfaces of the gas cutoff portion and facing the inside of the cell cover.

The gas cutoff portion may further include an extension portion extending from the gas direction change portion toward the bottom of the battery cell.

The cell cover may include stainless steel (SUS).

The gas cutoff portion may be provided integrally with the cell cover.

The gas cutoff portion may be provided in the form of a block separate from the cell cover.

The gas cutoff portion may include a fire-resistant material.

According to another embodiment, a device includes the at least one battery pack.

### [Advantageous Effects]

According to the disclosure, the battery pack and the device including the same capable of accommodating the battery cells in the pack case space-efficiently, maintaining the high energy density compared to the related art battery pack, simplifying the assembly process, and inducting the flow of venting gas in a safer direction may be provided.

The effects of the disclosure are not limited to the effects mentioned above, and other effects not mentioned will be clearly understood by those skilled in the art from the description of the claims.

### [Description of the Drawings]

FIG. 1 is a diagram illustrating a battery pack according to an exemplary embodiment of the disclosure.
FIG. 2 is a perspective view illustrating a cell unit of a battery pack according to an exemplary embodiment of the disclosure.
FIG. 3 is an exploded perspective view illustrating the cell unit shown in FIG. 2.
FIG. 4 is a diagram schematically illustrating a cross-section taken along line A-A' of FIG. 2.
FIG. 5 is a diagram schematically illustrating a state in which a pack case in FIG. 4 is coupled.
FIG. 6 is a perspective view illustrating gas cutoff portions according to a modification.
FIG. 7 is a diagram illustrating a device according to another exemplary embodiment of the disclosure.

### [Mode for Invention]

Hereinafter, various exemplary embodiments of the disclosure are described in detail with reference to the accompanying drawings so that those skilled in the art may easily carry out them. The disclosure may be modified in various different ways, and is not limited to the exemplary embodiments set forth herein.

Portions that are irrelevant to the description will be omitted to clearly describe the disclosure, and same reference numerals designate same or like elements throughout the description.

Further, in the drawings, the size and thickness of each element are arbitrarily illustrated enlarged or reduced for convenience of description, and the disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element, such as a layer, film, region, or plate is referred to as being "on" or "above" another element, it may be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similar to the case where it is described as being located "on" or "above" another part, the case where it is described as being located "below" or "under" another portion will also be understood with reference to the above-mentioned contents.

Further, throughout the description, when a portion is referred to as "including" or "comprising" a certain component, it means that the portion may further include other components, without excluding the other components, unless otherwise stated.

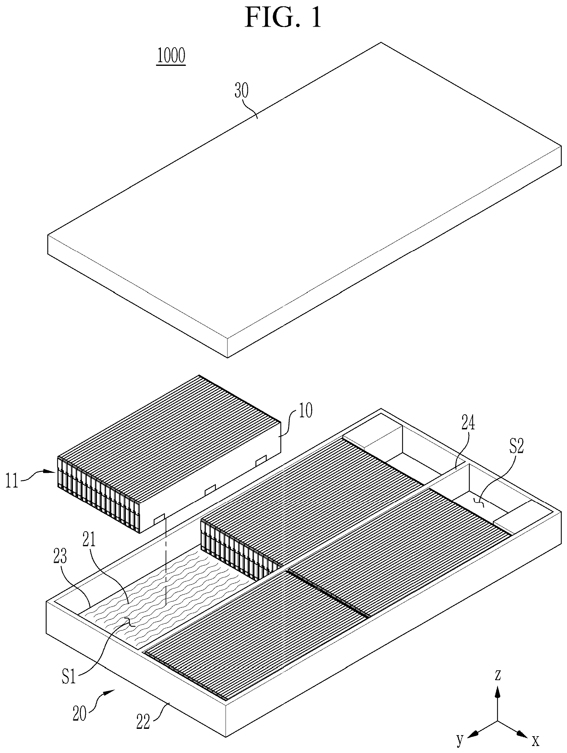

Hereinafter, a battery pack 1000 according to an exemplary embodiment of the disclosure is described with reference to FIG. 1.

FIG. 1 is a diagram illustrating a battery pack according to an exemplary embodiment of the disclosure.

As shown in FIG. 1, the battery pack 1000 of the disclosure may include a plurality of cell unit blocks 11, a pack case 20, and an upper cover 30.

The cell unit block 11 may include a plurality of cell units 10, and the plurality of cell units may be stacked in one direction. As is described again below, each cell unit 10 may include at least one battery cell and a cell cover that partially surrounds and supports the outside of the at least one battery cell. In this case, the at least one battery cell may include a pouch-type battery cell.

The pack case 20 has a seating structure in which the cell unit block 11 is directly seated without a separate case and may be configured to accommodate and support a plurality of cell unit blocks 11 in separate internal spaces. The upper cover 30 may be configured in the form of a cover covering an upper open portion of the pack case 20. Here, the upper cover 30 may be configured in the form of a box with an open bottom.

Meanwhile, in order to accommodate the plurality of cell unit blocks 11, the pack case 20 may include a lower plate 21, on which the cell unit blocks 11 are seated, and a sidewall 22 coupled to the lower plate 21 to form an internal space S1 accommodating the cell unit blocks.

On an outer surface of the sidewall 22, a gas valve (not shown) may be provided to discharge internal gas of the battery pack 1000, and on an inner surface of the sidewall 22 adjacent to the internal space S1, a gas inlet through which gas occurring in the cell unit block 11 is introduced. In addition, the sidewall 22 may have a side gas channel therein. The side gas channel may have one end connected to the gas inlet and extend along the inside of the sidewall 22, and the other end of the side gas channel may be connected to the gas valve.

In this case, a gas venting path leading to the gas inlet and side gas channel of the sidewall 22 and the gas valve may be individually provided for each cell unit block. That is, gas discharged from a first cell unit block may be discharged through a first gas venting path leading to the first gas inlet, the first side gas channel, and the first gas valve, and gas discharged from a second cell unit block may be discharged through a second gas venting path leading to a second gas inlet, a second side channel, and a second gas valve provided separately from the first gas inlet, the first side gas channel, and the first gas valve.

Meanwhile, the pack case 20 may further include a partition 24 that divides the internal space S1 into a plurality of spaces. In addition, the pack case 20 may have an accommodating space S2 that accommodates various electrical components required for the battery pack 1000.

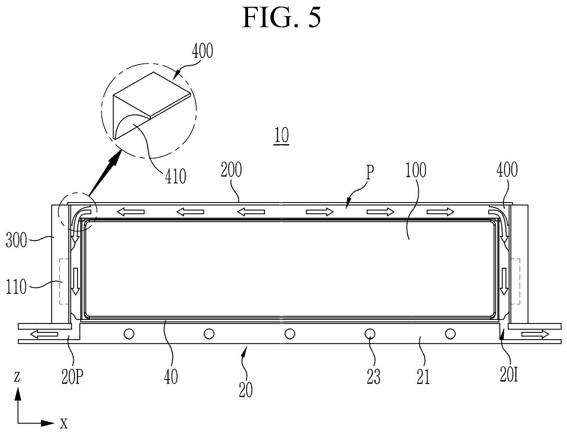

The lower plate 21 may include a heat sink 23 in thermal contact with the cell unit block 11. The heat sink 23 may be configured to be in thermal contact with the cell unit block 11 to cool the cell unit block 11 and may be disposed inside or outside the lower plate 21. In addition, to have cooling performance, the heat sink 23 may be formed of a metal material with high thermal conductivity and heat resistance. In addition, although not shown, a thermal resin layer 40 (see FIG. 5) may be formed below the cell unit block 11. The thermal resin layer 40 may transfer heat to the heat sink 23 so that heat occurring in the battery cell may be discharged through the heat sink 23. In addition, since the thermal resin layer 40 has adhesive properties, an upright state of the cell unit 10 included in the cell unit block 11 may be maintained more stably.

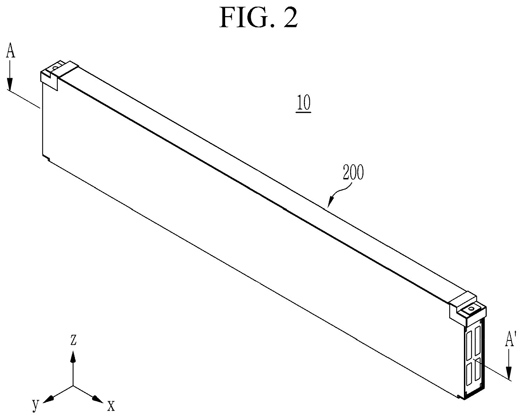

Next, referring to FIGS. 2 to 5, a configuration of the cell unit 10 is described in more detail.

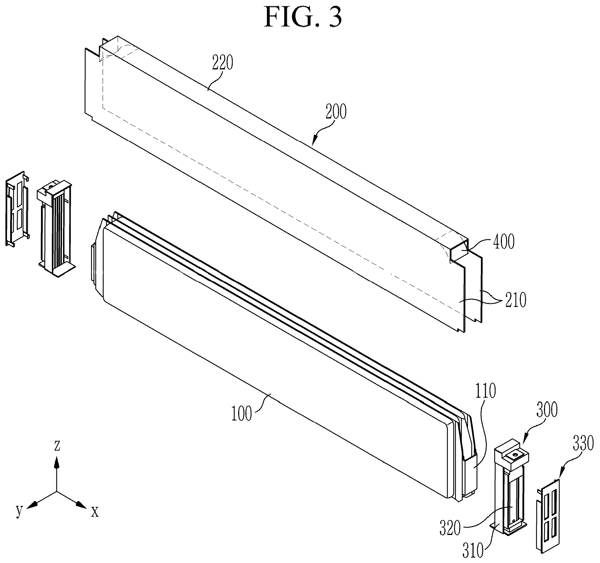

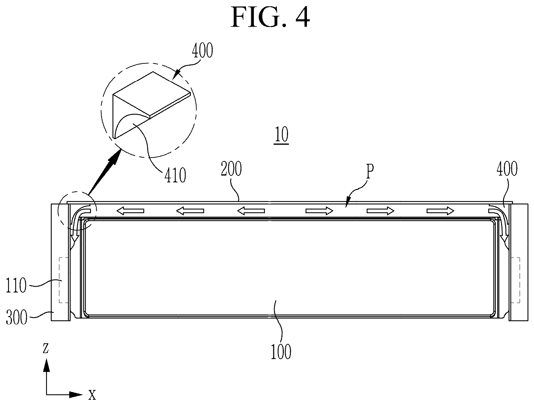

FIG. 2 is a perspective view illustrating a cell unit of a battery pack according to an exemplary embodiment of the disclosure, FIG. 3 is an exploded perspective view illustrating the cell unit shown in FIG. 2, FIG. 4 is a diagram schematically illustrating a cross section taken along line A-A' of FIG. 2, and FIG. 5 is a diagram schematically illustrating the state in which the pack case in FIG. 4 is coupled.

As shown in FIGS. 2 to 4, the cell unit 10 may include at least one battery cell 100 and a cell cover 200 that partially covers the outside of the battery cell 100. This cell cover 200 may cover both sides and the top of at least one battery cell 100 and may have a structure open to the front, rear, and bottom sides of the battery cell 100.

Referring to FIG. 3, the cell unit 10 may include at least one battery cell 100, the cell cover 200, and a busbar assembly 300.

The battery cell 100 of the cell unit 10 corresponds to a basic unit of charge and discharge and may be manufactured by accommodating an electrode assembly and an electrolyte material inside a pouch outer casing and sealing the pouch outer casing. In this case, the electrode assembly may be manufactured by interposing a separator between an anode electrode and a cathode electrode.

In addition, electrode leads 110 may be provided at the front and rear ends of the battery cell 100, may be electrically connected to the electrode assembly, and may be drawn out to the outside of the pouch outer casing. These battery cells may be configured in the form of a pouch. One cell unit 10 may include one or more battery cells 100, and when a plurality of battery cells 100 are included, they may be stacked in at least one direction. For example, referring to FIG. 3, the plurality of battery cells 100 may be stacked in a y-axis direction of the drawing and the electrode leads 110 may be aligned at the ends in a x-axis direction. As the battery cell 100, various types of battery cells 100 known at the time of filing of the disclosure may be used, and therefore, a detailed description of the configuration of the battery cell 100 is omitted.

The cell cover 200 may be configured to partially surround and support the outside of at least one battery cell 100. In this case, the cell cover may be configured to support at least one pouch-type battery cell in an upright position.

For example, as shown in FIG. 3, the cell cover 200 may be configured to partially cover the outside of the three pouch-shaped battery cells 100 and support the corresponding battery cells 100 in an upright position. Accordingly, the battery cells 100 may be directly seated and accommodated inside the pack case 20 without a module case. In particular, in the case of the battery cells 100, the outer casing is formed of a soft material, so the outer casing may be vulnerable to external shock and have low hardness. Therefore, it may not be easy to accommodate the battery cell 100 itself inside the pack case 20, without accommodating the battery cell 100 in a module case. However, in the case of the present exemplary embodiment, the plurality of battery cells 100 may be combined with the cell cover 200 in a state in which at least a portion is surrounded by the cell cover 200 and are directly accommodated inside the pack case 20, and thus, the stacked state may be maintained stably.

According to the present exemplary embodiment of the disclosure, there is no need to additionally provide the battery pack 1000 with a module case, a stacking frame, or fastening members, such as bolts, for maintaining the stacked state of the cells. Accordingly, a space occupied by other components, such as a module case or a stacking frame, or a resultant space for securing tolerance may be eliminated. Therefore, the battery cells may occupy more space as much as the removed space removed, the energy density of the battery pack may be further improved.

In addition, according to this aspect of the disclosure, since a module case, stacking frame, bolts, etc. are not provided, the volume and weight of the battery pack may be reduced and the manufacturing process may be simplified.

In addition, according to this aspect of the disclosure, handling of the battery cell 100 may become easier. For example, when accommodating a plurality of battery cells 100 inside a pack case, the battery cells 100 may be held by a jig or the like. In this case, the jig may hold the cell cover 200 surrounding the battery cell 100, rather than directly holding the battery cell 100. Accordingly, damage or breakage of the battery cell 100 due to the jig may be prevented.

In addition, according to this aspect of the disclosure, the cell cover 200 may be coupled to the battery cell 100, so that the battery cell 100 may be effectively protected even without a module case.

In an exemplary embodiment, the cell cover 200 may include a pair of side cover portions 210 that cover one side and the other side of at least one battery cell 100 and a cap portion 220 that covers the top of the at least one battery cell 100, while connecting the pair of side cover portions 210. That is, with respect to the battery cell 100, the cell cover 200 may be configured to cover the remaining three sides, excluding the front side from which the electrode lead 110 protrudes, rear side, and bottom side. Here, the cap portion 220 may be configured to be spaced apart from the pair of side cover portions 210 and the battery cell 100 inserted into the side cover portion 210 at a predetermined distance to form a gas movement passage P. In addition, the pair of side cover portions 210 may be configured to tightly contact the outermost large surface of the battery cell 100, and if necessary, adhesive tape, etc. may be provided and fixed between the battery cell 100 and the side cover portion 210.

For example, the cell cover 200 may be configured to cover three sides of at least one battery cell 100 and may be configured to have an overall cross-section in an 'n' shape, a 'u' shape, or a ' 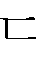 ' shape.

Meanwhile, the cell cover 200 may be configured so that a lower edge portion of the battery cell 100 is exposed toward the pack case 20. According to this implementation configuration, the lower edge portion of the battery cell 100 may directly contact the thermal resin layer 40 disposed on the bottom surface of the pack case 20, as shown in FIG. 5, so that cooling performance of the battery pack 1000 may be secured more effectively. That is, heat emitted from each battery cell 100 may be directly transferred to the pack case 20, thereby improving cooling performance. In addition, in this case, since an additional cooling structure does not need to be provided between the pouch-type battery cell 100 and the pack case, efficient cooling performance may be implemented. Meanwhile, in the battery pack 1000 according to the disclosure, thermal interface material (TIM) may be interposed to increase heat transfer performance between different components. For example, the TIM may be disposed between the battery cell 100 and the cell cover 200, between the cell cover 200 and the pack case 1000, and/or between the battery cell 100 and the pack case 1000. In this case, the cooling performance of the battery pack 1000 may be further improved.

In this manner, the cell cover 200 having a simplified structure may be formed of a metal material with higher rigidity than the case of the battery cell 100 and may protect at least one battery cell 100 covered by the cell cover 200 from external shock or vibrations. For example, the cell cover 200 may be formed of a material including stainless steel (SUS), which is easy to process and has high corrosion resistance. In this manner, when the cell cover 200 is formed of a stainless steel material, the cell cover 200 may have excellent mechanical strength and rigidity, so the stacked state of the battery cells 100 may be more stably supported. In addition, in this case, damage or breakage of the battery cell 100 from external impacts, such as an acicular body, may be effectively prevented. In addition, in this case, handling of the battery cell may become easier.

In addition, as in the above exemplary embodiment, when the cell cover 200 is formed of a stainless steel material, if flames occur in the battery cell 100, the overall structure may be stably maintained due to a high melting point of the stainless steel material. In particular, since stainless steel material has a melting point higher than that of aluminum material, so the cell cover 200 may not be melted even with flames emitted from the battery cell 100 and stably maintained in shape. Accordingly, excellent flame propagation preventing and delay effects between battery cells 100, venting control effects, etc. may be secured.

Meanwhile, the busbar assembly 300 is coupled to the electrode lead exposed to the side not covered by the cell cover 200. The busbar assembly 300 includes a busbar frame 310 and a busbar 320 coupled thereto. That is, the busbar 320 may be electrically connected to the electrode lead of at least one battery cell 100 covered by the cell cover 200, and the busbar frame 310 may be configured to support the busbar 320. In addition, the busbar assembly 300 may be configured to electrically connect a plurality of battery cells 100 to each other. For example, the busbar assembly 300 may be coupled to the electrode leads of the plurality of battery cells 100 to electrically connect the plurality of battery cells 100 in series and/or in parallel. The busbar assembly 300 may be coupled to the cell cover 200 in various manners. For example, the busbar assembly 300 may be coupled and fixed to the cell cover 200 through various fastening methods, such as bonding, welding, fitting, hooking, bolting, and riveting.

The insulating cover 330 may be configured to prevent a short circuit of the electrode lead or busbar 320. To this end, the insulating cover 330 may be formed of a polymer synthetic resin with insulating properties, prevent the busbar assembly 300 from being exposed to the outside, and secure and maintain electrical insulating properties.

Although not shown in FIGS. 2 and 3, the cell unit 10 may further include a clamping member configured to clamp the cell cover 200. The clamping member may be configured to clamp the cell cover 200 into which at least one battery cell 100 is inserted, to prevent both ends (the end of one side cover portion 210 and the end of another side cover portion 210) of the cell cover 200 from being open or prevent the inserted battery cell 100 from be separated from the cell cover 200. This clamping member may be formed of tape or may be formed of an elastic metal material.

In FIG. 3, there are two battery cells 100 covered by one cell cover 200, but the number of battery cells 100 covered by the cell cover 200 may change in various manners depending on the scale of the cell cover 200.

Meanwhile, as shown in FIGS. 3 and 4, the cell unit 10 according to an exemplary embodiment may further include a gas cutoff portion 400 disposed at an upper end of the cell cover 200 in a front-rear direction. That is, in the drawing, the gas cutoff portion 400 may be disposed to correspond a gap between the pair of side cover portions 210 (to correspond to the gap in the y-axis direction) and adjacent to the cap portion 220 at the upper end in a z-axis direction at an end of the cell cover 200 in the x-axis direction.

The gas cutoff portion 400 may be provided integrally with the cell cover 200 or may be separately provided using a fire-resistant material to be separately coupled in the form of a block to a corresponding portion.

For example, the gas cutoff portion 400 may be provided in the form of a block having a width corresponding to the gap between the pair of side cover portions 210, as shown to be enlarged in FIG. 4. The gas cutoff portion 400 may serve to block gas from escaping through the open upper end of the cell cover 200 in the front-rear direction.

In addition, the gas cutoff portion 400 may include a gas direction change portion 410 that may change a flow direction of the venting gas. The gas direction change portion 410 is preferably provided to guide the flow of gas in a downward direction, that is, in a downward direction of the z-axis direction in the drawing.

For example, in the gas direction change portion 410, a surface of the gas cutoff portion 400 facing in an inward direction of the cell cover 200 is formed as an arc or curved surface. In this case, as in the exemplary embodiment of FIG. 4, the flow of venting gas flowing in the front-rear direction of the cell cover 200 in the gas movement passage P at the upper inner side of the cell cover 200 may be changed to the downward direction.

More specifically, referring to FIG. 5, in the pouch-shaped battery cell 100, a thermally fused sealing portion may be located at an upper edge portion adjacent to the cap portion 220 and the side where the electrode leads 110 protrude, and a lower edge portion, which is not covered by the cell cover 200 but exposed, may be a non-sealing portion. Such a battery cell 100 may be prepared by disposing an electrode assembly, etc. on a single pouch sheet, folding the single pouch sheet in half, and thermally fusing the edges of the three sides. In particular, the upper edge portion may be a double side-folded (DSF) sealing portion. Here, DSF refers to a portion where the thermally fused portion is folded two or more times to be overlapped. The non-sealed lower edge portion may have a flat surface, may stably contact a bottom surface of the pack case 20, and may also be advantageous in dissipating heat through the thermal resin layer 40, etc.

In this pouch-type battery cell 100, the upper edge portion, which serves as a sealing portion, may be relatively more vulnerable to the discharge of high-temperature gas or flame than the lower edge portion, which is an unsealed portion. Due to this, when an internal pressure of the battery cell 100 increases, for example, the sealing portion of the upper edge portion may be torn, and venting gas or electrode pieces or active materials detached from the electrode assembly are likely to be ejected through the torn portion.

In order to secure a movement passage for venting gas in an emergency in preparation for the above situation, in the battery pack 1000 according to the present exemplary embodiment, the cap portion 220 of the cell cover 200 may be configured to be spaced apart from the upper edge portion of the battery cells 100 by a predetermined distance, thereby forming the gas movement passage P.

In addition, the battery pack 1000 according to an exemplary embodiment of the disclosure may include a heat sink 23. Here, the heat sink 23 refers to an object that absorbs heat from another object through direct or indirect thermal contact and dissipates heat. In particular, as shown in FIG. 5, in the battery pack 1000 according to an exemplary embodiment of the disclosure, the heat sink 23 including a flow path through which a coolant may flow may be provided in the lower plate 21 of the pack case 20 for light weight and simplification of components.

In addition, the pack case 20 may be further provided with an exhaust safety passage 20P having a path designed to guide the exhaust of venting gas from the battery pack 1000 in a specific direction. One side (an inlet 20I of the safety passage) of the exhaust safety passage 20P may be configured to communicate with an internal space of the pack case 20, and the other side (an outlet of the safety passage) may be configured to communicate with external air. In addition, the thermal resin layer 40 may not be located at the inlet 20I of the safety passage.

Referring to a gas venting path of the battery pack 1000 according to an exemplary embodiment of the disclosure, when venting gas is ejected to the upper edge portion of the battery cell 100, the venting gas may move in the front-rear direction (the X-axis direction) of the cell cover along the gas movement passage P inside the cell cover 200 because a vertical direction of the cell cover 200 is blocked. In addition, the venting gas that reaches the upper end of the cell cover 200 in the front-rear direction first hits the gas cutoff portion 400, and additional movement of the venting gas in the front-rear direction is restrained. For reference, without the gas cutoff portion 400, venting gas may escape forwardly or backwardly through the gap between the busbar assembly 300 and the cell cover 200, and in particular, as time passes, the busbar assembly, which is an injection-molded product, may be easily thermally melted to form a hole. Meanwhile, the gas cutoff portion 400 is formed of stainless steel, ceramic, silicon, and other materials having excellent fire resistance, and thus, the gas cutoff portion 400 may protect the busbar assembly 300 from heat of high temperature venting gas and block a forward and backward movement of venting gas.

In addition, the venting gas may flow downwardly by the gas direction change portion 410 of the gas cutoff portion 400. Here, a lead sealing portion disposed between the protruding portion of the electrode lead 110 in the battery cell 100 and the main body of the battery cell 100 is located below the gas cutoff portion 400. The lead sealing portion refers to a portion in which the sheet forming the pouch case and the electrode lead 110 are integrally sealed. Since the lead sealing portion is present at both ends of the cell cover 200 in the front-rear direction, an empty space may be present, and the empty space may be used as a vertical movement path for the venting gas. The venting gas whose flow has been changed to the downward direction by the gas direction change portion 410 moves along the vertical movement passage. At this time, if the gas direction change portion 410 is not provided and the gas cutoff portion 400 is configured to only block the end of the gas movement passage P, venting pressure acting on the gas cutoff portion 400 itself may increase and the gas cutoff portion 400 may be damaged before the flow of gas is properly guided. Meanwhile, since the gas direction change portion 410 that guides the flow of gas downwardly is provided to reduce the pressure acting on the gas cutoff portion 400, thereby preventing gas leakage in the front-rear direction and safely guiding the flow of gas downwardly.

Also, the inlet 20I of the safety passage of the aforementioned pack case 1000 is configured to communicate with the vertical movement passage. The venting gas may be changed in flow downwardly by the gas direction change portion 410 of the gas cutoff portion 400 and pass through the vertical movement passage to flow into the exhaust safety passage 20P, that is, the body of the pack case 20. The exhaust safety passage 20P of the pack case 20 may be configured such that the venting gas introduced into the inside of the pack case 20 is exhausted to the outside of the battery pack 1000 from a safer position, rather than the upward direction of the pack case 20. For example, the outlet of the exhaust safety passage 20P may face in a downward direction of the pack case 20 or may be connected to a device, that is, an exhaust port of a vehicle, using a pipe, so that the venting gas may be discharged to the rear of the vehicle through the exhaust port of the vehicle.

As described above, the battery pack according to the disclosure may include the components described above, so the battery cells may be space-efficiently accommodated in the pack case, the energy density may be higher than the related art battery pack, and the assembly process may be simplified. In addition, the battery pack according to the disclosure may restrain movement of the venting gas in the upward direction and guide the flow of venting gas in a specific direction, thereby achieving excellent fire safety.

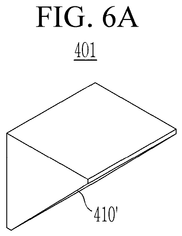

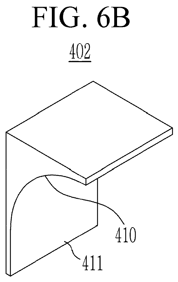

Hereinafter, a gas cutoff portion according to a modification of the disclosure is described with reference to FIG. 6.

FIG. 6 is a perspective view illustrating gas cutoff portions according to a modification.

As shown in (a) of FIG. 6, a gas cutoff portion 401 according to a modification may have a chamfered shape, rather than a curved shape, as a gas direction change portion. That is, an inclined surface connected from an upper surface to a side surface of the gas cutoff portion 401 may serve as a gas direction change portion 410'. In this case, as shown in (a) of FIG. 6, the shape at the front of the gas cutoff portion 401 may have a right triangle.

Alternatively, as shown in (b) of FIG. 6, a gas cutoff portion 402 according to another modification may further include an extension portion 411 extending further downwardly from the gas direction change portion 410. Accordingly, the area protecting the busbar assembly 300 may increase, and thus, gas may be more reliably blocked and the flow of gas may be guided downwardly. Meanwhile, the configuration of the gas cutoff portion is not limited thereto and may be modified into various forms.

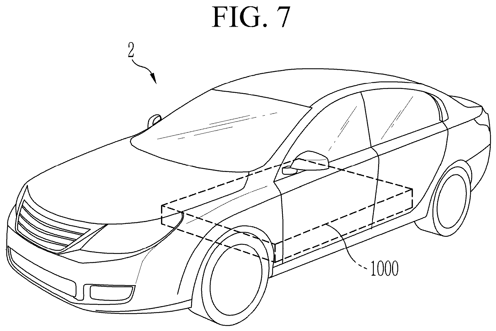

FIG. 7 is a diagram illustrating a device according to another exemplary embodiment of the disclosure.

As shown in FIG. 7, a device according to an exemplary embodiment of the disclosure may be a vehicle 2, and this device includes at least one battery pack 1000 (according to any one of the various exemplary embodiments described above).

In this manner, the battery pack 1000 provided in the vehicle 2 may provide electrical energy required for various operations of the vehicle 2.

For reference, the battery pack according to the disclosure may be applied to energy storage systems (ESSs) or various devices other than vehicles.

Meanwhile, although the terms indicating the directions, such as up, down, left and right have been used herein, these terms are only for convenience of description, and it is obvious to those skilled in the art that the terms may be changed depending on the position of target objects or observers.

### [Description of reference numerals]

10: cell unit
11: cell unit block
20: pack case
30: upper cover
100: battery cell
110: electrode lead
200: cell cover
210: side cover portion
220: cap portion
300: busbar assembly
330: insulating cover
400, 401, 402: gas cutoff portion
410, 410': gas direction change portion
1000: battery pack

## Claims

1. A battery pack (1000) comprising:
a plurality of cell units (10) each including at least one battery cell (100) and a cell cover (200) surrounding and supporting the at least one battery cell (100); and
a pack case (20) accommodating and supporting the plurality of cell units (10) in an internal space,
wherein the cell cover (200) includes:
a pair of side cover portions (210) covering one surface and the other surface of the at least one battery cell (100); and
a cap portion (220) connecting the pair of side cover portions (210) and covering an upper portion of the at least one battery cell (100),
**characterized in that**
the cell cover (200) further includes a gas cutoff portion (400, 401, 402) disposed to be adjacent to the cap portion (220) at an end of the cell cover (200) in a longitudinal direction,
wherein an upper edge portion of the at least one battery cell (100) and the cap portion (220) are spaced apart from each other to form a gas movement passage (P) extending in the longitudinal direction, the gas movement passage (P) communicates with a vertical movement passage from the gas cutoff portion (400, 401, 402) toward a bottom of the battery cell (100), and
wherein the gas cutoff portion (400, 401, 402) includes a gas direction change portion (410, 410') guiding a flow of gas moving through the gas movement passage (P) to the vertical movement passage.

2. The battery pack (1000) of claim 1, wherein:
the pack case (20) includes an exhaust safety passage (20P) for exhausting gas to the outside, and
the vertical movement passage communicates with the exhaust safety passage (20P).

3. The battery pack (1000) of claim 1, wherein:
the gas direction change portion (410, 410') is one surface of the gas cutoff portion (400, 401, 402) facing the inside of the cell cover (200).

4. The battery pack (1000) of claim 3, wherein:
the gas direction change portion (410) is an arc-shaped curved surface facing the inside of the cell cover (200).

5. The battery pack (1000) of claim 3, wherein:
the gas direction change portion (410') is an inclined surface connecting upper and side surfaces of the gas cutoff portion (401) and facing the inside of the cell cover (200).

6. The battery pack (1000) of claim 3, wherein:
the gas cutoff portion (402) further includes an extension portion (411) extending from the gas direction change portion (410) toward the bottom of the battery cell (100).

7. The battery pack (1000) of claim 1, wherein:
the cell cover (200) includes stainless steel, SUS.

8. The battery pack (1000) of claim 7, wherein:
the gas cutoff portion (400, 401, 402) is provided integrally with the cell cover (200).

9. The battery pack (1000) of claim 1, wherein:
the gas cutoff portion (400, 401, 402) is provided in the form of a block separate from the cell cover (200).

10. The battery pack (1000) of claim 9, wherein:
the gas cutoff portion (400, 401, 402) includes a fire-resistant material.

11. A device (2) including the battery pack (1000) of claim 1.

## Patentansprüche

1. Batteriepack (1000), umfassend:
eine Vielzahl von Zelleneinheiten (10), die jeweils mindestens eine Batteriezelle (100) und eine Zellenabdeckung (200) enthalten, die die mindestens eine Batteriezelle (100) umgibt und trägt; und
ein Packgehäuse (20), das die Vielzahl von Zelleneinheiten (10) in einem Innenraum aufnimmt und trägt,
wobei die Zellenabdeckung (200) Folgendes enthält:
ein Paar von Seitenabdeckungsabschnitten (210), die eine Oberfläche und die andere Oberfläche der mindestens einen Batteriezelle (100) abdecken; und
einen Kappenabschnitt (220), der das Paar von Seitenabdeckungsabschnitten (210) verbindet und einen oberen Abschnitt der mindestens einen Batteriezelle (100) abdeckt,
**dadurch gekennzeichnet, dass**
die Zellenabdeckung (200) ferner einen Gasabsperrabschnitt (400, 401, 402) enthält, der so angeordnet ist, dass er an den Kappenabschnitt (220) an einem Ende der Zellenabdeckung (200) in einer Längsrichtung angrenzt,
wobei ein oberer Kantenabschnitt der mindestens einen Batteriezelle (100) und der Kappenabschnitt (220) voneinander beabstandet sind, um eine Gasbewegungspassage (P) zu bilden, die sich in der Längsrichtung erstreckt, wobei die Gasbewegungspassage (P) mit einer vertikalen Bewegungspassage von dem Gasabsperrabschnitt (400, 401, 402) zu einem Boden der Batteriezelle (100) hin in Verbindung steht, und
wobei der Gasabsperrabschnitt (400, 401, 402) einen Gasrichtungsänderungsabschnitt (410, 410') umfasst, der einen Gasfluss, der sich durch die Gasbewegungspassage (P) bewegt, zur vertikalen Bewegungspassage leitet.

2. Batteriepack (1000) nach Anspruch 1, wobei:
das Packgehäuse (20) eine Auslass-Sicherheitspassage (20P) zum Ausstoßen von Gas nach außen enthält, und
die vertikale Bewegungspassage mit der Auslass-Sicherheitspassage (20P) in Verbindung steht.

3. Batteriepack (1000) nach Anspruch 1, wobei:
der Gasrichtungsänderungsabschnitt (410, 410') eine Oberfläche des Gasabsperrabschnitts (400, 401, 402) ist, die der Innenseite der Zellenabdeckung (200) zugewandt ist.

4. Batteriepack (1000) nach Anspruch 3, wobei:
der Gasrichtungsänderungsabschnitt (410) eine bogenförmig gekrümmte Oberfläche ist, die der Innenseite der Zellenabdeckung (200) zugewandt ist.

5. Batteriepack (1000) nach Anspruch 3, wobei:
der Gasrichtungsänderungsabschnitt (410') eine geneigte Oberfläche ist, die die obere und die seitliche Oberfläche des Gasabsperrabschnitts (401) verbindet und der Innenseite der Zellenabdeckung (200) zugewandt ist.

6. Batteriepack (1000) nach Anspruch 3, wobei:
der Gasabsperrabschnitt (402) ferner einen Verlängerungsabschnitt (411) enthält, der sich von dem Gasrichtungsänderungsabschnitt (410) zum Boden der Batteriezelle (100) hin erstreckt.

7. Batteriepack (1000) nach Anspruch 1, wobei:
die Zellenabdeckung (200) rostfreien Stahl, SUS, enthält.

8. Batteriepack (1000) nach Anspruch 7, wobei:
der Gasabsperrabschnitt (400, 401, 402) einstückig mit der Zellenabdeckung (200) vorgesehen ist.

9. Batteriepack (1000) nach Anspruch 1, wobei:
der Gasabsperrabschnitt (400, 401, 402) in Form eines von der Zellenabdeckung (200) getrennten Blocks vorgesehen ist.

10. Batteriepack (1000) nach Anspruch 9, wobei:
der Gasabsperrabschnitt (400, 401, 402) ein feuerfestes Material enthält.

11. Vorrichtung (2), die den Batteriepack (1000) nach Anspruch 1 enthält.

## Revendications

1. Bloc-batterie (1000) comprenant :
une pluralité d'unités de cellule (10) comprenant chacune au moins une cellule de batterie (100) et un couvercle de cellule (200) entourant et supportant ladite au moins une cellule de batterie (100) ; et
un boîtier de bloc (20) logeant et supportant la pluralité d'unités de cellule (10) dans un espace interne,
dans lequel le couvercle de cellule (200) comprend :
une paire de parties de couvercle latéral (210) recouvrant une surface et l'autre surface de ladite au moins une cellule de batterie (100) ; et
une partie de capuchon (220) reliant la paire de parties de couvercle latéral (210) et recouvrant une partie supérieure de ladite au moins une cellule de batterie (100),
**caractérisé en ce que**
le couvercle de cellule (200) comprend en outre une partie de coupure de gaz (400, 401, 402) disposée pour être adjacente à la partie de capuchon (220) à une extrémité du couvercle de cellule (200) dans une direction longitudinale,
dans lequel une partie de bord supérieur de ladite au moins une cellule de batterie (100) et la partie de capuchon (220) sont espacées l'une de l'autre pour former un passage de mouvement de gaz (P) s'étendant dans la direction longitudinale, le passage de mouvement de gaz (P) communique avec un passage de mouvement vertical depuis la partie de coupure de gaz (400, 401, 402) vers un fond de la cellule de batterie (100), et
dans lequel la partie de coupure de gaz (400, 401, 402) comprend une partie de changement de direction de gaz (410, 410') guidant un flux de gaz se déplaçant à travers le passage de mouvement de gaz (P) vers le passage de mouvement vertical.

2. Bloc-batterie (1000) selon la revendication 1, dans lequel:
le boîtier de bloc (20) comprend un passage de sécurité d'échappement (20P) pour évacuer le gaz vers l'extérieur, et
le passage de mouvement vertical communique avec le passage de sécurité d'échappement (20P).

3. Bloc-batterie (1000) selon la revendication 1, dans lequel :
la partie de changement de direction de gaz (410, 410') est une surface de la partie de coupure de gaz (400, 401, 402) faisant face à l'intérieur du couvercle de cellule (200).

4. Bloc-batterie (1000) selon la revendication 3, dans lequel:
la partie de changement de direction de gaz (410) est une surface incurvée en forme d'arc faisant face à l'intérieur du couvercle de cellule (200).

5. Bloc-batterie (1000) selon la revendication 3, dans lequel:
la partie de changement de direction de gaz (410') est une surface inclinée reliant les surfaces supérieure et latérale de la partie de coupure de gaz (401) et faisant face à l'intérieur du couvercle de cellule (200).

6. Bloc-batterie (1000) selon la revendication 3, dans lequel:
la partie de coupure de gaz (402) comprend en outre une partie d'extension (411) s'étendant depuis la partie de changement de direction de gaz (410) vers le fond de la cellule de batterie (100).

7. Bloc-batterie (1000) selon la revendication 1, dans lequel:
le couvercle de cellule (200) comprend de l'acier inoxydable, SUS.

8. Bloc-batterie (1000) selon la revendication 7, dans lequel:
la partie de coupure de gaz (400, 401, 402) est prévue d'un seul tenant avec le couvercle de cellule (200).

9. Bloc-batterie (1000) selon la revendication 1, dans lequel:
la partie de coupure de gaz (400, 401, 402) est prévue sous la forme d'un bloc séparé du couvercle de cellule (200).

10. Bloc-batterie (1000) selon la revendication 9, dans lequel :
la partie de coupure de gaz (400, 401, 402) comprend un matériau résistant au feu.

11. Dispositif (2) comprenant le bloc-batterie (1000) de la revendication 1.
